# EUROPÄISCHE PATENTANMELDUNG

(11) **EP 4 141 211 A1**
(43) Veröffentlichungstag der Anmeldung: **01.03.2023**
(21) Anmeldenummer: 22192424.4
(22) Anmeldetag: 26.08.2022
(51) Int. Cl.: E21B 7/00, F41H 11/136, G01V 3/00

(54) **BOHRER ZUR KAMPFMITTELDETEKTION**

(30) Priorität: 26.08.2021 DE 102021122140; 11.11.2021 DE 202021106176 U
(71) Anmelder: Tauber-Herklotz-Consult Geowissenschaftler & Ingenieure GmbH, 48268 Greven (DE)
(72) Erfinder: KAPPELHOFF, Jan-Bernd, 48159 Münster (DE); GREMMLER, Simon, 48149 Münster (DE); SCHMOLDT, Jan-Philipp, 48432 Rheine (DE); LEMMENS, Laurent, 48268 Greven (DE)
(74) Vertreter: Habbel, Ludwig

(57) **Zusammenfassung**

Bei einem Bohrer (1), der dazu bestimmt ist, eine Sondierungsbohrung zur Kampfmitteldetektion zu erzeugen, mit einem Bohrkopf (2) und einer Bohrschnecke (3), schlägt die Erfindung vor, dass der Bohrer (1) einen zur Kampfmitteldetektion bestimmten Sensor (7) aufweist.

## Beschreibung

Die Erfindung betrifft einen Bohrer nach dem Oberbegriff des Anspruchs 1.

Um ein Gelände auf möglicherweise vorhandene, im Boden verborgene Kampfmittel zu untersuchen, ist es bekannt, Sondierungsbohrungen in den Boden einzubringen und anschließend eine Sonde in die Sondierungsbohrung zu senken. Die Sonde weist einen Sensor auf, beispielsweise einen Magnetfeldsensor, um den Boden zu untersuchen. Um die sensorisch detektierten Gegenstände, bei denen es sich möglicherweise um Kampfmittel handelt, exakt lokalisieren zu können ist bekannt, die Position der Sondierungsbohrung mittels GPS zu bestimmen. Bei dem Untersuchungsgebiet handelt es sich typischerweise um eine Baustelle, bei der vor dem Beginn der Bauarbeiten der Boden auf das Vorhandensein von Kampfmittel untersucht wird, beispielsweise bevor die Bodenarbeiten zur Gründung bzw. Fundamentierung des Gebäudes begonnen werden.

Ein in der Praxis derzeit angewendeter Verfahrensablauf umfasst die folgenden Schritte:
1. Bohren der Sondierungs-Bohrlöcher. Dies erfolgt üblicherweise durch einen Baggerfahrer, wobei am Baggerarm eine Bohrglocke montiert ist, die ein Bohrgestänge trägt sowie den Drehantrieb für das Bohrgestänge. Das Bohrgestänge umfasst am distalen, unteren Ende einen Bohrkopf und daran anschließend eine oder mehrere Bohrschnecken, die jeweils in Art eines Rohrs mit einer außen umlaufenden Wendel ausgestaltet sind.
2. Auskleiden der Bohrung durch das Einbringen eines zum Beispiel aus Kunststoff bestehenden Auskleidungsrohrs. Dies erfolgt üblicherweise durch ein bis zwei Personen und dient dazu, das Bohrloch freizuhalten, so dass später die Sonde problemlos in das Bohrloch bis auf die gewünschte Tiefe abgesenkt werden kann. Um das Auskleidungsrohr problemlos in das Bohrloch einbringen zu können, ist das Auskleidungsrohr an seinem unteren Ende mit einer Kappe verschlossen, die beispielsweise kegelförmig ausgestaltet sein kann, so dass seine Außenkontur einem Nagel ähnlich ist.
3. Sondieren des Bohrloches mit einem System zur Detektion von Kampfmitteln. Diese erfolgt typischerweise durch speziell geschultes, qualifiziertes Personal, beispielsweise durch einen Geophysiker, Messtechniker oder einen Befähigungsscheininhaber nach §20 SprengG.
4. Entfernung des Auskleidungsrohrs aus dem Bohrloch, um das Auskleidungsrohr wiederverwenden zu können, und um es nicht als Hindernis z.B. für durchzuführende Bauarbeiten im Boden zu belassen. Diese Entfernung des Auskleidungsrohrs erfordert typischerweise ein bis zwei Personen sowie ggf. einen Baggerfahrer, um das Auskleidungsrohr aus der Sondierungsbohrung herauszuziehen.
5. Verfüllen des Bohrlochs zur Vermeidung von Gefahrenstellen für Mensch und Tier.

Der Personalaufwand für die Durchführung des bekannten Verfahrens ist vergleichsweise hoch und zudem zeitaufwendig.

Der Erfindung liegt die Aufgabe zugrunde, ein Hilfsmittel bereitzustellen, mit welchen Verfahrensschritte des bekannten Verfahrens erübrigt werden können und die Schaffung von Sondierungsbohrungen sowie die Sondierung selbst unkompliziert, wirtschaftlich und in vergleichsweise kürzerer Zeit durchführbar ist und mit dem die Sicherheit auf dem Untersuchungsgebiet erhöht werden kann.

Diese Aufgabe wird gelöst durch einen Bohrer mit den Merkmalen des Anspruchs 1. Vorteilhafte Ausgestaltungen der Erfindung sind in den Unteransprüchen beschrieben.

Die Erfindung schlägt mit anderen Worten vor, in dem Hohlraum eines Bohrers, z.B. innerhalb der rohrförmigen "Seele" einer Bohrschnecke, die Sonde unterzubringen, so dass beim Erzeugen der Sondierungsbohrung auch die Sondierung durchgeführt werden kann. Die oben genannten Verfahrensschritte 2 und 4, nämlich das Einbringen eines Auskleidungsrohrs in das Bohrloch sowie dessen spätere Entfernung aus dem Bohrloch, können daher ersatzlos entfallen, so dass ein erster zeitlicher Faktor eingespart werden kann. Hierdurch wird eine höhere Flächenleistung ermöglicht, es können also mehr Bohrmeter und dementsprechend mehr Quadratmeter pro Zeiteinheit bearbeitet werden als bislang möglich. Hinzu kommt als wirtschaftlicher Vorteil, dass die - typischerweise zwei - Mitarbeiter, die ansonsten ausschließlich mit dem Einbringen der Auskleidungsrohre und deren späterer Entfernung beschäftigt sind, für andere Arbeiten eingesetzt werden können.

Da die Auskleidungsrohre typischerweise mehrfach wiederverwendet werden, entfällt als zweiter zeitlicher Faktor auch der Gesamthandhabungsaufwand, der mit den Auskleidungsrohren verbunden ist, beispielsweise das Heranschaffen zu einer Baustelle, der Zusammenbau und der anschließende Abtransport. Weitere Einsparungsfaktoren bestehen darin, dass Platzbedarf, der für die Lagerung der Auskleidungsrohre zwischen zwei Verwendungen erforderlich ist, entfallen kann, und ebenso das Transportgerät, beispielsweise LKWs oder Lkw-Anhänger. Wenn bei größeren Bauvorhaben beispielsweise 300 Betonpfähle für die Gründung des Baus im Boden gegossen werden sollen und pro Pfahl zwei bis drei Sondierungsbohrungen vorgesehen sind, wie das in der Praxis nicht unüblich ist, stellt die Einsparung der ansonsten erforderlichen 600 bis 900 Auskleidungsrohre einen deutlichen wirtschaftlichen Vorteil im Vergleich zu dem bisher angewendeten Verfahren dar. Sowohl ökonomisch als auch ökologisch ist vorteilhaft, dass die Auskleidungsrohre grundsätzlich nicht hergestellt zu werden brauchen. Bislang besteht ein regelmäßiger Bedarf an neuen Auskleidungsrohren, da üblicherweise ein gewisser Anteil der Auskleidungsrohre beschädigt wird, für den Ersatz beschafft werden muss, und ebenso entfällt die Entsorgung der beschädigten Auskleidungsrohre.

Bei der Verwendung der Auskleidungsrohre kommt hinzu, dass sich bei deren Entfernung aus dem Bohrloch in manchen Fällen die kegelförmige Kappe vom Auskleidungsrohr löst und im Boden verbleibt. Dies ist wirtschaftlich nachteilig, da Ersatzkappen bereitgestellt werden müssen, und es ist ökologisch nachteilig, da die zum Beispiel aus Kunststoff bestehenden Kappen im Boden verbleiben, ohne nach Erreichung ihrer Nutzungsdauer recycelt oder anderweitig planmäßig verwertet werden zu können.

Die Messdaten der Sonde sind direkt während des Bohrens oder unmittelbar nach dem Bohren verfügbar. Das mögliche Vorhandensein von Kampfmittel wird daher optimal schnell bekannt, was einen erheblichen Sicherheitsgewinn auf dem Untersuchungsgebiet bedeutet, z.B. auf der jeweiligen Baustelle.

Im Rahmen des vorliegenden Vorschlags wird der Bohrer begrifflich in die folgenden Bestandteile unterteilt: den Bohrkopf, nämlich das distale, untere Ende, das als "Spitze" oder "Bohrkrone" ausgestaltet ist, sowie die Bohrschnecke, nämlich den anschließenden, gewindeartigen Teil des Bohrers. Die gewünschte Länge des Bohrers kann dadurch erreicht werden, dass zwei oder mehr Bohrschnecken aneinandergereiht werden. Beispielsweise kann der Bohrer insofern modular aufgebaut sein, dass der Bohrkopf nicht als integrales Bestandteil einer speziell ausgestalteten Sonder-Bohrschnecke vorliegt, sondern vielmehr als separates Bauteil, welches mit der Bohrschnecke der jeweils gewünschten Länge - oder mit der jeweils gewünschten Anzahl aneinandergereihter Bohrschnecken - kombiniert wird.

Bei der Bohrschnecke wiederum wird unterschieden zwischen der zentralen zylindrischen "Seele" und der Wendel, die außen um die Seele umläuft. Der ebenfalls wendeiförmig verlaufende Freiraum, der sich außerhalb der Seele aufgrund der Wendel ergibt, dient zum Abführen des vom Bohrkopf erzeugten Bohrkleins.

In einer Ausgestaltung kann der Sensor im Bohrkopf untergebracht sein. Auf diese Weise kann ein zusätzlicher Zeitgewinn erreicht werden, da die Bohrungstiefe optimal klein gehalten werden kann, nämlich nur so tief sein muss, wie es der Sondierungstiefe entspricht, also der Tiefe, in welcher die Sonde sensorisch den Boden erfassen soll.

In einer anderen Ausgestaltung ist insbesondere vorgesehen, dass der Sensor nicht im Bohrkopf selbst, sondern in dem Bereich der Bohrschnecke untergebracht wird. Je nachdem, für welche Messmethode der jeweils verwendete Sensor ausgelegt ist kann die Erfordernis, für den Bohrkopf bestimmte Materialien verwenden zu müssen, die Funktionsfähigkeit des Sensors beeinträchtigen, wenn der Sensor innerhalb des Bohrkopfes angeordnet werden sollte. Da das Bohrgestänge geringeren mechanischen Belastungen ausgesetzt ist als der Bohrkopf, ist die Auswahl an geeigneten Materialien zur Herstellung des Bohrgestänges größer als für die Herstellung des Bohrkopfes, so dass es konstruktiv einfacher ist, bei einem bestimmten anzuwendenden Messverfahren das Bohrgestänge aus einem dafür geeigneten Material bereitzustellen.

Wenn der Sensor als Teil der Bohrschnecke ausgestaltet ist, ist die Bohrschnecke so ausgestaltet, dass sie die Wirkung des Sensors nicht unzulässig beeinträchtigt. Dies kann je nach verwendeter Messmethode, also je nach verwendetem Sensortyp, auf unterschiedliche Weise sichergestellt werden:
a) Die Umfangs-Oberfläche der Bohrschnecke - typischerweise: die Mantelfläche der Seele - ist mit einer Ausnehmung versehen, z.B. als längliche Fräsung, kreisrunde Sackbohrung, Durchgangsbohrung oder dergleichen. In der Ausnehmung ist der Sensor angeordnet und z. B. von einem Einbettungs-Material umhüllt. Wenn der Sensor z. B. zur Magnetfeldmessung eingesetzt wird, kann die Bohrschnecke z. B. aus Stahl bestehen, also aus einem für den Sensor "intransparenten" Material, während das Einbettungs-Material z. B. ein Kunststoff oder eine Keramikwerkstoff sein kann.

Auf diese Weise kann eine große Vielfalt von Werkstoffen für die Bohrschnecke verwendet werden. Das Einbettungs-Material ermöglicht die gewünschte Wirkung des Sensors und beeinträchtigt diese nicht unzulässig. Das Einbettungs-Material kann außen durch eine verschleißfeste Abdeckung geschützt sein, die für den Sensor "transparent" ist, z. B. aus einem keramischen Material besteht, welches z. B. eine Magnetfeldmessung nicht beeinträchtigt. So können wünschenswerte elastische Eigenschaften eines Kunststoff-Einbettungsmaterials genutzt werden, ohne einen unerwünscht schnellen Verschleiß in Kauf nehmen zu müssen.

Das Bohrgestänge kann beispielsweise exakt auf einer bestimmten Höhe gehalten und dabei gedreht werden, um die Sondierung ringsum durchzuführen - ähnlich wie das kreisende Licht eines Leuchtturms. Wenn das Material der Bohrschnecke die gewünschte Wirkung des Sensors in einem unzulässigen Ausmaß beeinträchtigen würde und der Sensor lediglich ein "Sichtfenster" durch das Einbettungs-Material aufweist, kann durch die Drehbewegung eine möglichst vollständige Erfassung der Umgebung innerhalb des Bodens ermöglicht werden.

b) In einer anderen Ausgestaltung kann vorgesehen sein, dass die Seele der Bohrschnecke als Rohr ausgestaltet ist und in deren Inneren der Sensor untergebracht ist. Hierdurch ist eine gegen Abrasion und Feuchtigkeit geschützte Anordnung des Sensors sichergestellt. Der Werkstoff der Bohrschnecke ist in diesem Fall an die Wirkungsweise des Sensors angepasst und für den Sensor "transparent".

Dabei kann vorgesehen sein, lediglich die Seele aus dem gewünschten Werkstoff zu fertigen, während die Wendel aus einem anderen Werkstoff besteht.

In einer Ausgestaltung ist die Wendel unterbrochen und weist eine Lücke auf, um rings um die Position des Sensors außerhalb der Seele ein "Sichtfenster" für den Sensor zu schaffen. Auf diese Weise kann ein Material für die Wendel verwendet werden, welches mechanisch hoch belastbar ist, auch wenn es für den Sensor nicht ausreichend "transparent" ist. Bohrgut, das durch den unteren Abschnitt der Wendel nach oben in diese Lücke gefördert wird, staut sich auf und wächst nach oben an, bis es von dem oberen Abschnitt der Wendel oberhalb der Lücke erfasst und weiter nach oben gefördert wird.

Um rings um die Position des Sensors außerhalb der Seele ein "Sichtfenster" für den Sensor zu schaffen, kann die Wendel in einer anderen Ausgestaltung zwar ebenfalls unterbrochen sein, allerdings lückenlos. Die Unterbrechung besteht in diesem Fall aus einem Materialwechsel. Die Förderwirksamkeit der Wendel wird hierdurch verbessert, und beispielsweise kann eine metallische Wendel rings um die Position des Sensors einen Abschnitt aus Kunststoff aufweisen, der auswechselbar ausgestaltet ist, z. B. in Form von zwei Halbschalen, die ähnlich einer Manschette auf der Seele der Bohr Bohrschnecke montiert werden, so dass dieser Abschnitt bei Verschleiß schnell und unkompliziert ausgewechselt werden kann.

In einer Ausgestaltung kann die Bohrschnecke als besonders kurzes Element ausgestaltet sein, das zwischen zwei anderen Abschnitten des Bohrers montiert wird, z. B. zwischen dem Bohrkopf und der nächsten Bohrschnecke üblicher Länge. Durch die kurze Länge der "Sensor-Bohrschnecke" werden deren Materialkosten vergleichsweise gering gehalten, so dass die "Sensor-Bohrschnecke" aus einem Werkstoff bestehen kann, der entweder teurer ist oder schneller verschleißt als eine andere Bohrschnecke des Bohrers, und der die gewünschte Transparenz für den Sensor aufweist. Aufgrund der kleinen baulichen Abmessungen stellen die höheren Werkstoffkosten oder der schnellere Verschleiß dieser "Sensor-Bohrschnecke" angesichts der wirtschaftlichen Vorteile, die mit einem vorschlagsgemäß ausgestalteten Bohrer ermöglicht werden, keinen relevanten wirtschaftlich Nachteil dar.

Der vorschlagsgemäß ausgestalteten Bohrer muss nicht nur mechanischen Ansprüchen genügen. Vielmehr ist für den Betrieb des im Bohrer angeordneten Sensors eine elektrische Ausstattung des Bohrers erforderlich, um Energie für den Sensor bereitzustellen und die vom Sensor erfassten Daten in Form von Sensorsignalen zur weiteren Verarbeitung aus dem Bohrer herauszuleiten.

Der Bohrer kann in einer Ausgestaltung von außen mit elektrische Energie versorgt werden. In einer als vorteilhaft erachteten Ausgestaltung weist der Bohrer jedoch einen eigenen Energiespeicher auf, der wenigstens den Betrieb des Sensors ermöglicht und ggf. auch den Betrieb von weiteren Komponenten, die beispielsweise für die Speicherung, Verarbeitung und / oder Übertragung von Sensordaten im Bohrer vorgesehen sind. Ökologisch vorteilhaft kann es sich um einen aufladbaren Energiespeicher handeln, so dass dieser nach Erschöpfung wieder aufgeladen werden kann und daher vielfach wiederverwendbar ist.

Die Messdaten des Sensors, welche von dem Sensor als Rohdaten geliefert werden, werden als Sensordaten oder als Sondierungsdaten bezeichnet. Aus Vereinfachungsgründen werden im Rahmen des vorliegenden Vorschlags auch daraus abgeleitete Daten als Sensor- oder Sondierungsdaten bezeichnet, beispielsweise Daten, die zunächst als Rohdaten vom Sensor geliefert werden, ggf. gespeichert werden, und welche verarbeitet worden sind, z.B. in ein anderes Datenformat, oder die zugunsten einer einfacheren Funkübertragung komprimiert worden sind. In einer Ausgestaltung des Bohrers kann vorgesehen sein, dass die Sensordaten unmittelbar an einen Datenspeicher oder eine elektronische Auswertungsschaltung übertragen werden, die jeweils außerhalb des Bohrers angeordnet sind. In einer als vorteilhaft erachteten Ausgestaltung des Bohrers ist dieser jedoch mit einem Speicher für die Sondierungsdaten ausgestattet, so dass diese lokal abgespeichert werden können. Auf diese Weise ist eine hohe Datensicherheit in der Art gewährleistet, dass die Sensordaten zuverlässig gesichert werden können. Zur Auswertung der Sensordaten können diese dann entweder noch während sich der Bohrer im Bohrloch befindet, an die oben erwähnte Auswertungsschaltung übertragen werden, oder sie können später, nachdem die Bohrung beendet worden ist, kabellos oder kabelgebunden ausgelesen und weitergeleitet bzw. weiterverarbeitet werden.

In einer Ausgestaltung des Bohrers ist vorgesehen, dass die Sondierungsdaten während der Messung übertragen werden können. Dies erhöht sie Sicherheit, weil evtl. ein Hinweis auf Kampfmittel bereits während des Bohrens gegeben werden kann. Z. B. können die Sondierungsdaten kabelgebunden innerhalb einer Bohrschnecke übertragen werden - und innerhalb jeder weiteren Bohrschnecke des Bohrers, wobei elektrische Kontakte an den Anschlussstellen der Bohrschnecken vorgesehen sind. Alternativ kann die Datenübertragung innerhalb der Bohrschnecke kabelgebunden, jedoch von einer zur anderen Bohrschnecke kabellos per Funk erfolgen, z. B. nach einem WLAN oder Bluetooth-Funkstandard. Hierdurch werden Beeinträchtigungen der Datenübertragung ausgeschlossen, die ansonsten durch Verschmutzung oder mechanische Beschädigung der Kontakte hervorgerufen werden könnten.

Die Übertragung der Sondierungsdaten vom Bohrer zu weiteren Elementen kann per Funk erfolgen, z. B. zu einem Baggerarm, der den Bohrer trägt. Entlang des Baggerarms bis zu einer Verarbeitungsanlage, die sich z. B. in der Fahrerkabine des Baggers befindet, kann die Übertragung der Sondierungsdaten wiederum kabelgebunden erfolgen. Die jeweils nur kurzen Funkstrecken gewährleisten eine hohe Übertragungssicherheit im Sinne der Datensicherheit und ermöglichen den Funkbetrieb mit geringem Energieaufwand.

Ein Ausführungsbeispiel der Erfindung wird anhand der rein schematischen Darstellungen nachfolgend näher erläutert. Dabei zeigt
- Fig. 1: eine Ansicht von außen auf einen Bohrer, und
- Fig. 2: einen Längsschnitt durch den Bohrer von Fig. 1.

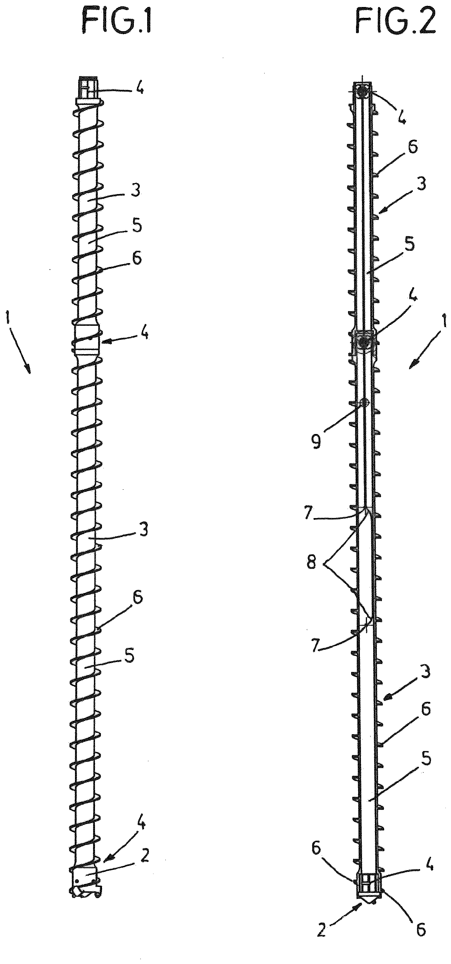

In Fig. 1 ist ein Bohrer 1 dargestellt, der einen Bohrkopf 2 sowie zwei unterschiedlich lange Bohrschnecken 3 aufweist. Jede Bohrschnecke 3 ist an ihrem jeweils oberen Ende mit einer Kupplung 4 versehen, so dass mehrere Bohrschnecken 3 aneinandergereiht werden können und der gesamte Bohrer 1 mit einer solchen Kupplung 4 an einen Antrieb angeschlossen werden kann, beispielsweise an eine Bohrglocke, die an einem Bagger von dessen Baggerarm gehalten wird. Auch der Bohrkopf 2 weist eine solche Kupplung 4 auf, so dass er an das untere Ende einer beliebigen Bohrschnecke 3 angeschlossen werden kann.

Aus Fig. 2 ist ersichtlich, dass die Bohrschnecken 3 jeweils eine als Rohr ausgestaltete Seele 5 aufweisen sowie eine außen um die Seele 5 verlaufende Wendel 6. Auch der Bohrkopf 2 weist zumindest einen Abschnitt einer solchen Wendel 6 auf.

Um die Sondierung zu ermöglichen, muss die Bohrschnecke 3 aus geeignetem Material gefertigt sein. Üblicherweise verwendete Bohrschnecken 3 aus Stahl stören die Messungen je nach verwendetem Messverfahren derart stark, z.B. im Falle einer Magnetfeldmessung, dass eine gesicherte Detektion von Kampfmittel nicht mehr möglich ist. Bei dem dargestellten Ausführungsbeispiel beinhaltet der Bohrer 1 eine Bohrschnecke 3 mit eisenfreien Anteilen im Bereich der Messsensorik. Die Messsensorik enthält bei dem dargestellten Ausführungsbeispiel zwei Sensoren 7, die durch ein Kabel 8 miteinander verbunden sind, so dass eine Energieversorgung der Sensoren 7 und auch die Übertragung von Sensorsignalen innerhalb der Bohrschnecke 3 drahtgebunden erfolgt.

Die Anteile der Bohrschnecke 3 nahe den beiden Sensoren 7 bestehen aus Kunststoff und nicht ferromagnetischen Elementen, die für die Sensoren 7 ausreichend transparent sind die Messungen nicht oder nur in einem so geringen Ausmaß beeinflussen, dass eine Detektion von Kampfmittel ermöglicht ist. Die Lage der Sensoren 7 ist so gewählt, dass sie von eventuellen Eisenanteilen der Bohrschnecke 3 ausreichend weit entfernt sind.

Die Messeinrichtung im Inneren des Bohrers 1 enthält zusätzlich zu den beiden Sensoren 7, die als Magnetfeld-Sensoren ausgestaltet sind, einen Datenspeicher 9. Die Daten der Sensoren 7 werden bei dem dargestellten Ausführungsbeispiel des Bohrers 1 auf dem Datenspeicher 9 in derselben Bohrschnecke 3 gespeichert, in der die beiden Sensoren 7 angeordnet sind.

Die Sensordaten können nach dem Heraufziehen des Bohrers 1 aus der Bohrung entweder ausgelesen werden, oder sie werden an einen zusätzlichen Datenspeicher übertragen, der außerhalb des Bohrers 1 angeordnet ist, so dass sie dort in Echtzeit dargestellt werden können, z.B. innerhalb der Fahrerkabine des erwähnten Baggers.

Die Übertragung der Sensordaten innerhalb der Bohrschnecke 3 erfolgt mittels Kabel, zum Beispiel mittels desselben Kabels 8, welches innerhalb der Seele 5 der Bohrschnecke 3 von den beiden Sensoren 7 weiter bis zur Kupplung 4 verläuft. Von einer zur nächsten Bohrschnecke 3 und vom Bohrer 1, also von der obersten Bohrschnecke 3, zu externen Geräten erfolgt die Datenübertragung jeweils kontaktlos über eine Funkverbindung, bei dem dargestellten Ausführungsbeispiel nach dem Bluetooth-Standard.

Die Energieversorgung der Sensoren 7, einer im Bohrer 1 angeordneten Datenverarbeitungseinheit, des in der Bohrschnecke 3 angeordneten Datenspeichers 9 ist in der Bohrschnecke 3 untergebracht und nicht eigens dargestellt. Sie kann beispielsweise als wiederaufladbarer Energiespeicher in Form eines Akkus oder Kondensators ausgestaltet sein und ist auf bei dem dargestellten Ausführungsbeispiel einer Platine angeordnet, auf der sich auch der Datenspeicher 9 befindet. Die Lage des Energiespeichers ist so gewählt, dass dadurch die Messdaten nicht beeinträchtigt werden, so dass der Energiespeicher ggf. auch abweichend von dem dargestellten Ausführungsbeispiel in Entfernung von dem Datenspeicher 9 angeordnet sein kann.

Die Stromversorgung kann nach der Sondierung wieder aufgeladen werden. Hierzu sind Kontakte im Bereich der Kupplung 4 vorgesehen, so dass diese Kontakte während des Bohrvorgangs geschützt angeordnet sind und, nach dem der Bohrer 1 aus der Bohrung herausgezogen worden ist, problemlos zugänglich sind, so dass sie ggf. gereinigt werden können und eine Energieübertragung zuverlässig ermöglichen.

Die Daten, die dem erzeugten Bohrloch zugeordnet sind, werden mit den Daten eines Geräts zur Positionsbestimmung verknüpft, welches beispielsweise am Bohrer 1, an der erwähnten Bohrglocke oder an dem erwähnten Baggerarm angeordnet sein kann und beispielsweise als GPS-Empfänger ausgestaltet sein kann. Hierdurch wird eine präzise Verortung der erfassten Sensordaten erreicht. Daten, die auf das Vorhandensein von Kampfmittel hindeuten, werden dadurch direkt hinsichtlich ihrer horizontalen und vertikalen Lage lokalisiert. Eine Übersicht über das gesamte Untersuchungsgebiet eines Projektes, der Messfortschritt und die Vollständigkeit der Sondierung ist damit jederzeit möglich.

### Bezugszeichen:

- 1: Bohrer
- 2: Bohrkopf
- 3: Bohrschnecke
- 4: Kupplung
- 5: Seele
- 6: Wendel
- 7: Sensor
- 8: Kabel
- 9: Datenspeicher

## Patentansprüche

1. Bohrer (1),
der dazu bestimmt ist, eine Sondierungsbohrung zur Kampfmitteldetektion zu erzeugen,
mit einem Bohrkopf (2)
und einer Bohrschnecke (3),
**dadurch gekennzeichnet,**
**dass** der Bohrer (1) einen zur Kampfmitteldetektion bestimmten Sensor (7) aufweist.

2. Bohrer nach Anspruch 1,
**dadurch gekennzeichnet,**
**dass** der Bohrer (1) einen Datenspeicher (9) aufweist, der dazu bestimmt ist, die von dem Sensor (7) erzeugten Sensordaten zu speichern.

3. Bohrer nach Anspruch 1 oder 2,
**dadurch gekennzeichnet,**
**dass** der Bohrer (1) einen elektrischen Energiespeicher aufweist, der dazu bestimmt ist, die zum Betrieb des Sensors (7) und / oder des Datenspeichers (9) erforderliche elektrische Energie zu speichern und an den Sensor (7) und / oder den Datenspeicher (9) abzugeben.

4. Bohrer nach Anspruch 3,
**dadurch gekennzeichnet,**
**dass** der Energiespeicher innerhalb der Bohrschnecke (3) angeordnet ist
und die Bohrschnecke (3) von außen zugängliche elektrische Kontakte aufweist, die mit dem Energiespeicher elektrisch leitend verbunden sind und dazu bestimmt sind, eine Aufladung des Energiespeichers von außen zu ermöglichen.

5. Bohrer nach einem der vorhergehenden Ansprüche,
**dadurch gekennzeichnet,**
**dass** die Bohrschnecke (3) eine rohrförmige Seele (5) und eine außen um die Seele (5) umlaufende Wendel (6) aufweist,
und **dass** der Sensor (7) innerhalb der Seele (5) angeordnet ist,
und **dass** die Seele (5) wenigstens innerhalb eines dem Sensor (7) benachbarten Bereichs aus einem die Wirkungsweise des Sensors (7) ermöglichenden, für den Sensor (7) transparenten Werkstoff besteht.

6. Bohrer nach einem der vorhergehenden Ansprüche,
**dadurch gekennzeichnet,**
**dass** der Sensor (7) als Magnetfeldsensor ausgestaltet ist.

7. Bohrer nach den Ansprüchen 5 und 6,
**dadurch gekennzeichnet,**
**dass** die Seele (5) der den Sensor (7) aufnehmenden Bohrschnecke (3) wenigstens innerhalb eines dem Sensor (7) benachbarten Bereichs Anteile aus einem Kunststoff und / oder aus einem keramischen Werkstoff aufweist.

8. Bohrer nach einem der vorhergehenden Ansprüche,
**dadurch gekennzeichnet,**
**dass** die Bohrschnecke (3) einen Funksender aufweist, der zur Übertragung von Sensordaten an einen außerhalb des Bohrers (1) befindlichen Funkempfänger bestimmt ist.

9. Bohrer nach einem der vorhergehenden Ansprüche,
**dadurch gekennzeichnet,**
**dass** der Bohrer (1) wenigstens zwei Bohrschnecken (3) aufweist,
und **dass** eine Bohrschnecke (3) einen Funksender aufweist, der zur Übertragung von Sensordaten an einen in der zweiten Bohrschnecke (3) befindlichen Funkempfänger bestimmt ist.

10. Bohrer nach Anspruch 9,
**dadurch gekennzeichnet,**
**dass** jede Bohrschnecke (3) einen Funksender und einen Funkempfänger aufweist,
derart, dass zwei oder mehr Bohrschnecken (3) aneinanderreihbar sind und eine Datenübertragung von Sensordaten von der ersten bis zur letzten der miteinander verbundenen Bohrschnecken (3) ermöglicht ist.
